Europäisches Patentamt

European Patent Office

Office européen des brevets

(19)

(11) Publication number: **0 075 171**
**A1**

# EUROPEAN PATENT APPLICATION

(21) Application number: **82108188.2**

(22) Date of filing: **06.09.82**

(51) Int. Cl.³: **G 01 J 3/32,** G 01 N 21/25,
G 02 F 1/13

(30) Priority: **17.09.81 US 303035**

(43) Date of publication of application: **30.03.83**
**Bulletin 83/13**

(84) Designated Contracting States: **DE FR GB IT SE**

(71) Applicant: **MILES LABORATORIES INC., 1127 Myrtle
Street, Elkhart Indiana 46514 (US)**

(72) Inventor: **King, James S., 58189 Gary Drice, Goshen
Indiana 46526 (US)**

(74) Representative: **Senftl, Hannes, Dr. et al, c/o Bayer AG
Zentralbereich Patente Marken und Lizenzen,
D-5090 Leverkusen 1, Bayerwerk (DE)**

(54) Apparatus and process for analytical and diagnostic purposes.

(57) Apparatus and process for analytical and diagnostic purposes relating to body fluids wherein light (14) is directed onto the specimen (16) and the reflected light (20) from the specimen is diffracted either by a prism or by a grating (26) into various wavelengths. The wavelengths are focused onto a liquid crystal shutter array (30) wherein selected shutters are energized to pass light of a preselected wavelength. Light of the selected wavelength is then transmitted to a detector (40) which transmits an electrical output signal proportionate to the intensity of the beam of light. A converter network transduces the electrical signal proportional in magnitude to the intensity of the light, so that there is a readout at the machine indicating a particular component and its quantitative amount. The readout is a visual record on which there is a developed graph; or the readout simply indicates the presence of excess or insufficiency of a certain component in a «O» or «1» mode; or in other instances, the readout provides a numerical analysis.

-1-

## APPARATUS AND PROCESS FOR ANALYTICAL
## AND DIAGNOSTIC PURPOSES

### Background and Prior Art

The prior art has a number of spectrophotometers used to make both qualitative and quantitative analyses whereby analytical and diagnostic information can be determined from body fluids such as urine, spinal fluid and blood.

Generally, these spectrophotometers are accurate; but, because they involve moving parts and require calibration as well as subjective readings, these previous spectrophotometers tend to be inaccurate and cannot maintain a consistent characteristic from one instrument to the next, and fail to maintain a consistent readout for any given instrument throughout its life.

Typical examples of the prior art are mechanical type spectrophotometers which are used for measuring the optical properties in each of a number of different samples. This mechanical method for spectrophotometric measuring of optical properties utilizes a narrow band of accurately controlled frequency. The optical system effects splitting of monochromatic light into two fractions impinging one fraction on the photosensitive test element and the other fraction of monochromatic light passes through a reference sample region and impinges on a reference photosensitive element. The test consists of comparing the test specimen with a reference material. That is the strategy extensively employed by the prior art.

MS 1193

-2-

## Summary of the Invention

The device of the present invention has virtually no moving parts and does not depend in its operational principle upon any mechanical movement. The purpose of eliminating mechanical componentry in the spectrophotometer is to reduce power requirements to a low level so that the device can be made portable and can even be battery operated in some instances.

Additional advantages of eliminating mechanical movement is that the device can be made to operate more consistently and accurately and is quite less expensive to fabricate.

An important feature of the present invention is the utilization of a liquid crystal shutter array which is selectively energized. By addressing certain segments the energized segment will transmit light. Conversely, the unaddressed segments will be opaque to light. A particular pattern of the shutter array is electrically addressed, to make it transmit light, in accordance with the particular material undergoing tests. Thus, for urine where the component being tested for is bilirubin, a selected one or combination of the shutters is energized and the shutter pattern made light sensitive is correlated to the spectrum pattern peculiar to bilirubin. Thus, light reflected from the specimen has a specimen pattern characteristic of, say bilirubin, and the shutter array is selectively addressed to transmit light of a particular frequency or wavelength. A detector then transduces the pattern and light density to a readable value telling how much bilirubin is present.

The light which is used in the present instrument is directed onto the specimen undergoing tests, and is obtained from a commercially available light source. The light is substantially white light. Its intensity can be variable or fixed according to particular design requirement.

MS 1193

-3-

The instrument utilizes a solid state switching of the light by addressing a particular shutter or shutters of the shutter array to make selected light frequencies (wavelengths) transmittable. Again, the instrument is programmed in accordance with the material being tested within the specimen. The invention is particularly adapted for urinalysis of which the usual components of interest are bilirubin, blood, ketone, glucose, etc., these being the usual components of relevant information.

Once a light source is directed onto the sample the reflected light is then passed either through a diffraction grating or a prism and is separated into various frequency components. The light frequencies are directed to the shutter. Depending then upon the energization of respective shutters, a selected light pattern is transmitted to a detector. Each shutter is individually capable of transmitting light when addressed by an electrical signal, and a particular shutter is assigned a respective portion of the spectrum. Since any energized shutter will pass a given portion of the spectrum onto a detector, there will result an electrical signal proportional in current to the light level of the wavelength passing through an energized shutter of the liquid crystal.

An algorithm is developed, typically by a microprocessor, in which light intensity passing through the array and spectrum pattern is transduced to produce a mechanical or visual readout identifying the presence and amount of a particular component within the specimen.

Brief Description of the Drawings

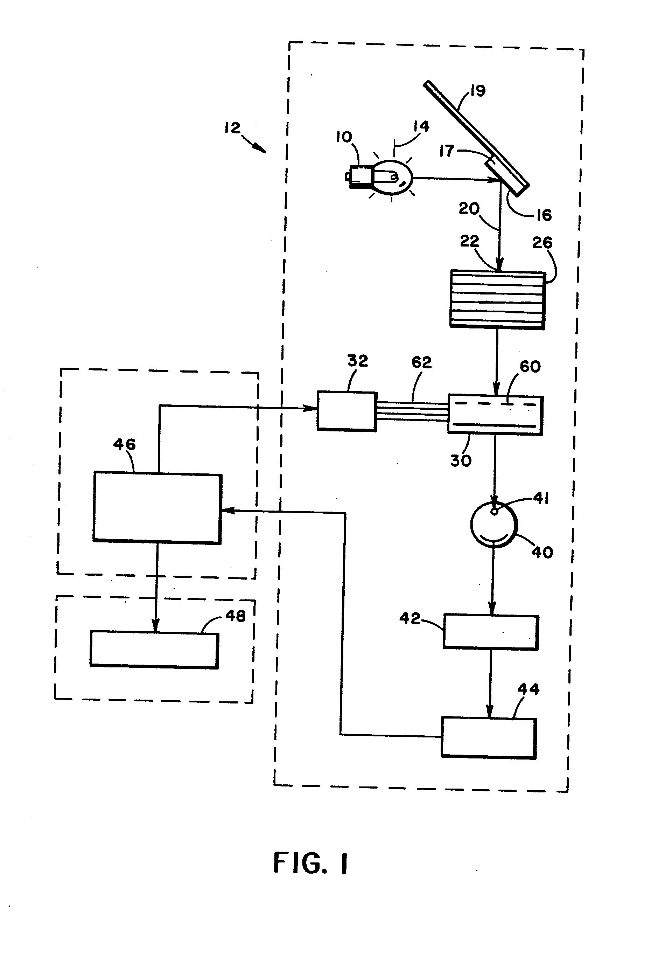

Fig. 1 is a schematic block diagram of the invention, illustrating the optic unit, the diffractive unit, light shutters, electric means addressing the shutters and the detector which serves to transduce the intensity of light to an electrical signal proportional to the light passing through the shutter array;

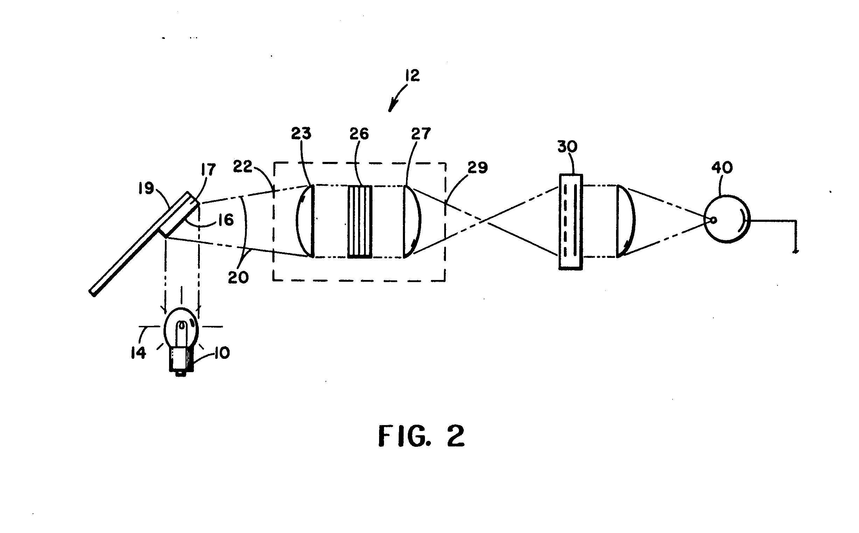

Fig. 2 is a detailed block diagram of the optical subsystem of the invention;

Fig. 3 is a detail view of the shutter illustrated in front elevation;

Fig. 4 is a section view taken on line 4-4 of Fig. 3;

Fig. 5 is an exploded view of the shutter assembly illustrating one of the shutters in a light transmitting mode;

Figs 6 and 7 are graphs showing nitrite and protein components of urine and illustrating graph values obtainable with the present invention.

## Description of the Preferred Embodiment

A light source 10 forming part of an optic unit, designated generally by reference numeral 12, has light beams 14 directed onto a specimen 16 undergoing tests. The specimen can consist of any preferred body fluid and is generally contemplated to be a body fluid such as urine, blood, spinal fluid or the like. For purposes of the present disclosure the specimen is urine. The instrument is especially adapted for urinalysis and can be readily calibrated to test for such components of interest as bilirubin, blood, glucose, ketone, nitrite, protein and the like. The light source 10 is a commerically available light source of substantially white light, and is arranged so that light of sufficient intensity is first directed onto and is then reflected from the specimen 16 on a suitable test device which may comprise a reagent pad 17 suspended by a holder or substrate 19. The reflected light (represented by beams 20) is directed through an aperture 22, then through a condenser lens 23, and grid diffraction grating 26 which separates the reflected light into monochromatic light

MS 1193

of various frequencies ranging from red to blue.

The diffracted light is then focused by collection lens 27 through aperture 29. Reference to a spectrum frequency range from red to blue is indicative only of one design of the machine. The spectrum is next focused onto a liquid crystal shutter array 30 in which there is a number of individual shutters 33, each separately addressable by an electrical addressing means or driver 32 which can make respective ones of the crystal shutters light transmittable.

Normally, the individual crystal shutters are nontransmittable and become transmittable only when electrically adressed. Any energized shutter will pass the respective portion of the spectrum which is focused upon it. Transmitted light is directed next to a detector 40 which is a photocell and transduces light intensity to current which communicates first to a preamplifier (current to voltage) and then to an amplifier 42. The intensity and pattern of light frequency is processed through an appropriate algorithm signal and converted from analog to digital through a processor 44 and produces an output of pattern and intensity relative to the proportion of detected substance within the specimen by a central processor 46. The central processor unit (CPU) 46 is then connected to display 48. The intensity and pattern of light is made proportional to the amount of tested material present. The pattern of light transmitted through the liquid crystal shutter array determines the presence of a particular material.

Thus, the spectrophotometer is useable to determine both presence and relative amount of a particular material and is, both a qualitative and quantitative analyzer.

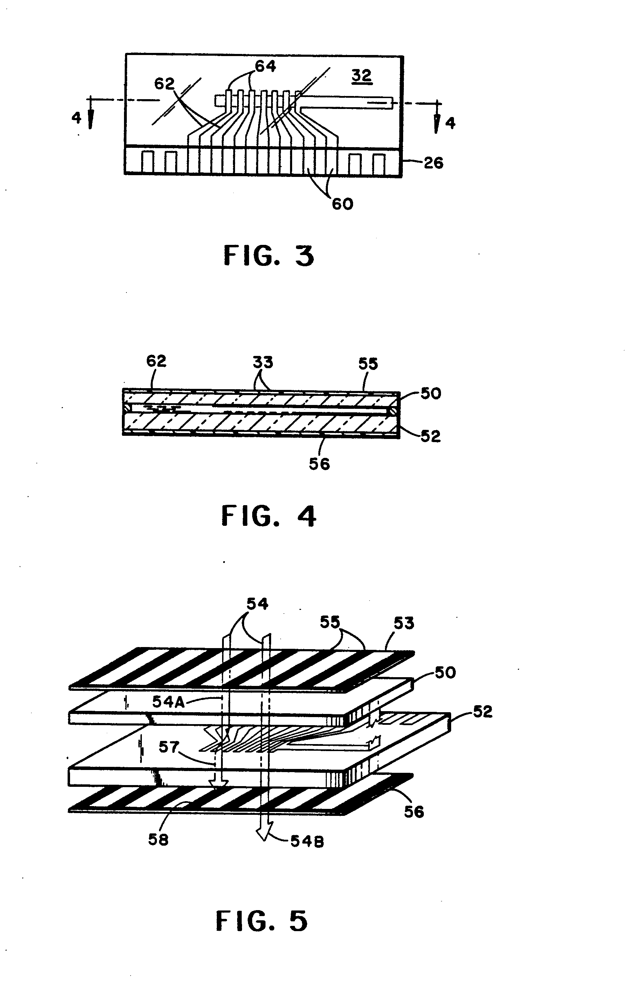

Referring next to Figs. 3-5 the light shutter is shown in greater detail and consists of two glass plates 50, 52 retaining liquid crystal molecules therebetween.

MS 1193

Overlying the top plate is a polarizer 53 consisting of a transparent layer with electrically addressable segments 55 forming a first electrode. The effect of the addressing is to produce a field effect by the voltage operated electrode and the result is that the long chain liquid crystal (LC) molecules will align in precise orientation. The result is that light beams 54 are then twisted or not by the LC molecules so that when the light reaches the bottom polarizer 56, a second electrode 58 acts as a filter so that light will pass, or be absorbed. Details of the LC which are primarily voltage responsive rather than current flow responsive is explained in EDN, October 5, 1977 edition, K. J. Richardson.

The rationale of the LC is to cause light passing through the shutters to become twisted 54A (nontransmissive) or straight 54B (transmissive) by a combination of the addressed electrodes 60 having conductor 62 which connects with drive elements 64 of a driver 32.

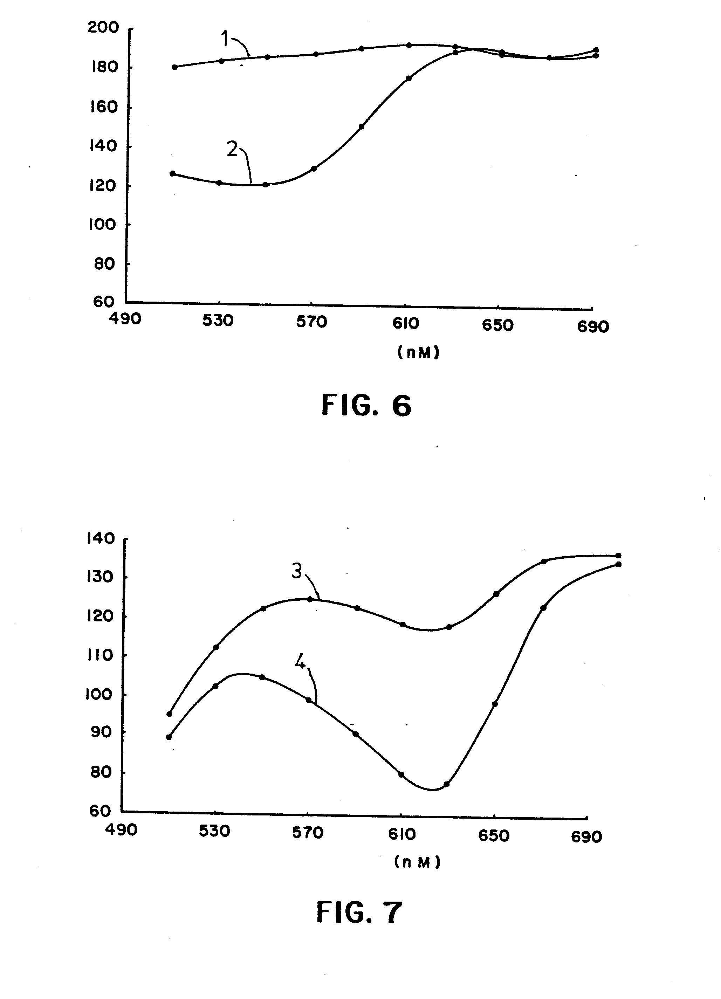

Referring next to the graphs of Figs. 6 and 7, a microprocessor within CPU 46 develops both a drive pattern to 32 and an algorithm from analog-to-digital processor 44 to develop a smooth curve or a slope from the wavelength and intensity in reference to a fixed point so that it will provide graphic information of a given material. Thus, in Fig. 6 a test for nitrite, plotting Decode Value vs. Wavelength will establish the coordinate points distinguishing a negative urine from a positive capsule (urine). Similarly in Fig. 7, a test for protein, plotting Decode Value vs. Wavelength, the display will establish coordinate points distinguishing negative urine from a positive capsule (urine).

The display may also be simply a logic 0 or logic 1 readout; or, the display can develop a slope in reference to a standard point and read "above" or "below" data in reference to a standard line. Obviously, the

MS 1193

machine is useful also for determining the presence or nonpresence of a given material rather than a graphic output. Likewise, an audible signal or a visual signal can provide a simple yes/no to the presence of a particular material.

Preparation of suitable test devices includes incorporating reagent composition with a suitable carrier matrix or reagent pad, and the latter can take on a multitude of forms. Thus, U.S. Patent No. 3,846,247 teaches the use of felt, porous ceramic strips, and woven or matted glass fibers. Additionally, U.S. Patent No. 3,552,928 teaches the use of wood sticks, cloth, sponge material, and argillaceous substances. The use of synthetic resin fleeces and glass fiber felts as a carrier matrix is suggested in British Patent No. 1,369,139. Another British Patent No. 1,349,623 proposes the use of a light-permeable meshwork of thin filaments as a cover for an underlying paper matrix. Polyamide fibers are taught in French Patent No. 2,170,397. These suggestions notwithstanding, however, the material predominantly used in the art as a carrier matrix or reagent pad, and that which is especially suitable for the present invention, is a bibulous paper such as filter paper. It can thus be seen that there is a great deal of leeway in selecting an appropriate material for use as a carrier matrix, and the matrix can take on various physical forms. All of these types are intended as being useful within the scope of the present invention.

The reagent composition can be incorporated with the carrier matrix in a variety of ways. The ingredients can be dissolved or suspended in water or other suitable solvent, such as chloroform, methylene chloride, methanol, cyclohexane and mixtures thereof. Such a solution or suspension can then be used to impregnate filter paper, as an ink wherein the reagents are printed on a suitable matrix, or the carrier matrix can be coated with the reagent composition, such as with a doctor blade.

The presently preferred method is to impregnate filter paper with a solution or suspension of the reagent composition, the preferred solvent being distilled or deionized water. Impregnation can be accomplished by dipping a piece of filter paper into the solution and drying the dipped paper in an air oven. The dried paper is then typically cut into a square measuring about 0.5 cm on a side, which is then mounted on one end of a polystyrene substrate measuring about 0.5 x 10 cm. Mounting is accomplished through use of double faced adhesive tape, such as that available from the 3M Co., known as Double Stick.

## Operation

In operation, urine droplets 16 are deposited onto a reagent pad 17. The mixture is exposed to a white light source 10. The white light source 10 after being directed onto the specimen 16, becomes reflected light which in turn is diffracted by grating 26 into a spectrum of one or more wavelengths. These wavelength combinations are indicative of the material which is present within the specimen. The wavelength is developed without any moving parts. The wavelengths are then directed to a crystal shutter array 30 and selected ones of the shutters are electrically addressed to make certain liquid crystal segments light transmittable. The nonaddressed shutters remain opaque. The shutter array pattern is selected according to the characteristic of the material being tested on the reagent pad.

The liquid crystal shutter array transmits only the pattern of wavelengths in accordance which the addressing means or drive 32 which is programmed for the particular material of interest. Once the transmitted

MS 1193

0075171

wavelength or combination of wavelengths are passed through the liquid crystal shutter array, it is directed next to a detector 40. The combination, pattern and intensity of light are then transduced to an electrical signal which is preamplified, amplified 42, converted to digital form 44, transmitted to CPU 46 and next yields information concerning the presence and relative quantity of the material through display 48. It should be noted that none of the test requires any moving parts or mutiple detectors. Thus, a wavelength selection can be made without calibrating or adjusting one part relative to another or requiring multiple detectors.

An adjustment of the shutters is required because in the "off" state the liquid crystal array is not 100% nontransmissive and likewise in the "on" state the array is not 100% transmissive.

These characteristics, however, are compensated for by making a reference measurement in both the "off" and "on" condition and such readings are compared to readings of a test specimen in both the "off" and "on" state. The results are then provided the microprocessor and are mathematically processed so that this potential source of error is nulled in the final readout.

## Conclusion

Although the present invention has been illustrated and described in connection with a single example embodiment it will be understood that this is illustrative of the invention and is by no means restrictive thereof. It is reasonably to be expected that those skilled in the art make numerous revisions and adaptations of the invention and it is intended that such revisions and adaptations will be included within the scope of the following claims as equivalent of the invention.

MS 1193

Claims:

1. An apparatus for qualitative and quantitative testing of body fluids comprising:

optical means having in combination a light source providing a beam of light;

means forming a sample test location where the specimen is deposited and arranged to transmit a beam of reflected light from the light source which is directed against the specimen;

a diffraction means for separating the reflected light into its component spectrum, and thereafter directing the diffracted spectrum beams;

a liquid crystal shutter array for receiving the directed spectral beams from said diffraction means;

means for electrically addressing the liquid crystal shutter array to make selected shutters light transmissive and thereby effect transmission of a predetermined spectrum corresponding to the material analyzed; and

a converting network for transducing the beams which are passed through a said crystal shutter array to an electrical signal proportional to intensity of the light passed through the crystal shutter array.

2. An apparatus in accordance with claim 1 characterized in that it a display apparatus connected to the output of said converting network whereby the analysis of said specimen can be read.

MS 1193

3. An apparatus in accordance with claim 1 or 2, characterized in that the means for addressing the liquid crystal shutter array is selectively changeable to render a predetermined combination of liquid crystal shutters in a light transmitting mode so that selected materials can be effectively identified and measured in the specimen.

4. A process for analyzing materials through a spectrophotometer reflectance technique comprising the steps of directing source light onto a material to be tested, passing reflected light from the material being tested through a light diffracting means, selectively energizing predetermined ones of said shutter array to make them light transmittable whereby a selected pattern of spectral light components are passed through said array, focussing the spectral components onto a liquid crystal shutter array which serves to selectively pass only certain of the spectral components, detecting and thereafter transducing from light energy to electric current the respectively transmitted spectral components which are transmitted through said crystal shutter array, effecting electrical voltage values proportional to the light intensity, and measuring the intensity of patterned spectral light to determine presence and quantity of the material present in the specimen tested.

5. A process in accordance with claim 4, characterized in that it further comprises the step of recording the transduced spectral components and their light intensity.

6. A process in accordance with claim 5, characterized in that it further comprises the step of mechanically recording the output of said spectrophotometer reflectance apparatus to provide a visual record of the component of interest and its relative amount within the specimen tested.

MS 1193

7.   A process in accordance with any of claims 4 to 6, characterized in that it further comprises the step of addressing selected ones of said liquid crystal shutter array segments to determine the desired wavelength, spectrum communicated to the transducer means.

8.   A process in accordance with any of claims 4 to 7, characterized in that the selected crystal shutter components correspond in pattern to the wavelengths of the components intended to be analyzed within the material under test.

9.   A process in accordance with any of claims 4 to 8, characterized in the test apparatus is calibrated by adjusting a central processing unit in accordance with the transmissive characteristics of the respective liquid crystal shutter array segments.

10.   A process for testing a specimen to determine the presence and relative quantities of components of interest within the specimen, comprising the steps of directing a source of light onto the specimen undergoing testing, directing the reflected light through a diffracting means to separate the reflected light into component wavelengths, selectively energizing preselected ones of a plurality of liquid crystal shutters which are arranged in an array with each shutter of an array individually adapted for transmitting light of a given wavelength when addressed, focussing the diffracted light onto the shutter array, thereafter measuring the diffracted wavelengths selectively passed by the shutter array to determine by the wavelength pattern and intensity, and processing such measured information to determine the quantity of each such component within the specimen undergoing test.

MS 1193

FIG. I

0075171

1/4

0075171

FIG. 2

**FIG. 3**

**FIG. 4**

**FIG. 5**

4 / 4

0075171

FIG. 6

FIG. 7

| European Patent Office | **EUROPEAN SEARCH REPORT** |
|---|---|

## DOCUMENTS CONSIDERED TO BE RELEVANT

| Category | Citation of document with indication, where appropriate, of relevant passages | Relevant to claim |
|---|---|---|
| X | US - A - 4 193 691 (E.J. FJARLIE) <br> * claims 1 to 3, 6, 8 ; column 1, lines 30 to 38 ; column 1, line 48 to column 2, line 61 ; column 6, line 49 to column 7, line 12 ; fig. 1 to 3 * <br> -- | 1-8, 10 |
| A | DE - B - 2 027 450 (APPLIED RESEARCH LABORATORIES S.A.) <br> * claims 1, 2 ; fig. 1 * <br> -- | 1,4, 10 |
| A | US - A - 4 125 372 (S. KAWAI et al.) <br> * claim 1 ; abstract; fig. 2 * <br> -- | 1,4, 10 |
| A | US - A - 3 578 980 (J.A. DECKER et al.) <br> * claim 1 ; abstract ; column 2, lines 16 to 25, 60 to 75 ; fig. 1 to 4 * <br> -- | 1 |
| A | US - A - 4 050 814 (T.A. McFADDEN) <br> * claims 1, 3 to 5 ; abstract ; column 2, lines 22 to 36 ; fig. 1, 2, 4, 5 * <br> ---- | 1 |

### CLASSIFICATION OF THE APPLICATION (Int. Cl. 3)

G 01 J 3/32
G 01 N 21/25
G 02 F 1/13

### TECHNICAL FIELDS SEARCHED (Int.Cl. 3)

G 01 J 3/00
G 01 N 21/00
G 01 N 33/00
G 02 F 1/13

### CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search Berlin | Date of completion of the search 04-11-1982 | Examiner HOFMANN |
|---|---|---|

EPO Form 1503.1 06.78